# EUROPEAN PATENT SPECIFICATION

(11) **EP 1 396 107 B1**
(45) Date of publication and mention of the grant of the patent: **09.03.2005**
(21) Application number: 02727084.2
(22) Date of filing: 01.05.2002
(51) Int. Cl.: H04J 14/02, H04J 13/00

(54) **OPTICAL COMMUNICATIONS SYSTEM AND METHOD FOR TRANSMITTING POINT-TO-POINT AND BROADCAST SIGNALS**
OPTISCHES KOMMUNIKATIONSSYSTEM UND -VERFAHREN ZUR ÜBERTRAGUNG VON PUNKT-ZU-PUNKT- UND VERTEILSIGNALEN
SYSTEME DE TELECOMMUNICATIONS OPTIQUES ET PROCEDE DE TRANSMISSION DE SIGNAUX POINT-A-POINT ET DE DIFFUSION

(30) Priority: 01.05.2001 US 287371 P
(43) Date of publication of application: 10.03.2004
(73) Proprietor: Accessphotonic Networks Inc., Sainte-foy, Quebec G1P 4S4 (CA)
(72) Inventor: FATHALLAH, Habib, Sainte-Foy, Québec G1V 4T8 (CA)
(74) Representative: Habasque, Etienne Joel Jean-François
(86) International application number: PCT/CA2002/000647
(87) International publication number: WO 2002/089378

(56) References cited:
- EP-A- 1 026 849
- WO-A-99/07087
- SOTOBAYASHI H ET AL: "BROADCAST-AND-SELECT OCDM/WDM NETWORK USING 10GBIT/S SPECTRUM-SLICED SUPERCONTINUUM BPSK PULSE CODE SEQUENCES" ELECTRONICS LETTERS, IEE STEVENAGE, GB, vol. 35, no. 22, 28 October 1999 (1999-10-28), pages 1966-1967, XP006012909 ISSN: 0013-5194
- AYADI F ET AL: "Throughput calculation of an optical CDMA system using coherent modulation" ELECTRICAL AND COMPUTER ENGINEERING, 1995. CANADIAN CONFERENCE ON MONTREAL, QUE., CANADA 5-8 SEPT. 1995, NEW YORK, NY, USA,IEEE, US, 5 September 1995 (1995-09-05), pages 83-86, XP010193621 ISBN: 0-7803-2766-7
- AYADI F ET AL: "Network architecture for a high bandwidth WDMA/CDMA local area network" COMMUNICATIONS, COMPUTERS AND SIGNAL PROCESSING, 1997. 10 YEARS PACRIM 1987-1997 - NETWORKING THE PACIFIC RIM. 1997 IEEE PACIFIC RIM CONFERENCE ON VICTORIA, BC, CANADA 20-22 AUG. 1997, NEW YORK, NY, USA,IEEE, US, 20 August 1997 (1997-08-20), pages 766-769, XP010245085 ISBN: 0-7803-3905-3
- HUANG W ET AL: "Optimal performance of coherent optical pulse CDMA systems based on code and phase synchronisation and interference cancellation" IEE PROCEEDINGS: OPTOELECTRONICS, INSTITUTION OF ELECTRICAL ENGINEERS, STEVENAGE, GB, vol. 145, no. 6, 15 December 1998 (1998-12-15), pages 353-359, XP006011395 ISSN: 1350-2433
- ZHANG J-G ET AL: "SYNCHRONOUS ALL-OPTICAL CODE-DIVISION MULTIPLE-ACCESS NETWORKS" EUROPEAN TRANSACTIONS ON TELECOMMUNICATIONS, EUREL PUBLICATION, MILANO, IT, vol. 8, no. 2, 1 March 1997 (1997-03-01), pages 179-189, XP000687113 ISSN: 1124-318X
- ATLAS D A ET AL: "Multiwavelength analog video transport network" INTERNATIONAL TOPICAL MEETING ON MICROWAVE PHOTONICS. MWP'99. TECHNICAL DIGEST (CAT. NO.99EX301), INTERNATIONAL TOPICAL MEETING ON MICROWAVE PHOTONICS. MWP'99. TECHNICAL DIGEST, MELBOURNE, VIC., AUSTRALIA, 17-19 NOV. 1999, pages 189-192 vol.1, XP010367441 1999, Piscataway, NJ, USA, IEEE, USA ISBN: 0-7803-5558-X

## Description

### FIELD OF THE INVENTION

The present invention relates to optical communications and more particularly concerns a system and method for simultaneously sending point-to-point and broadcast signals over a network.

### BACKGROUND OF THE INVENTION

Fiber-to-the-curb and fiber-to-the-home applications are an important step for the successful deployment of all-optical communications systems. In these applications, the capacity to accommodate two different type of services, broadcast and point-to-point transmissions, is key for a solution to be promising. point-to-point signals are exchanged between the central office and each user of the system independently, and each should be accessible only to the particular user it is addressed to. Broadcast transmissions, such as a radio or television signals, should indiscriminately be accessible by all users of the system. It is mandatory for a solution to allow ultimate security for the point to point links while allowing real transparency of broadcast services for all users. User requirements in these networks is challenging because of the nature diversity of the services. Very few approaches exist for fiber optic based infrastructure; most of them are limited by the number of users (or subscribers) that could achieve profitability for the service provider.

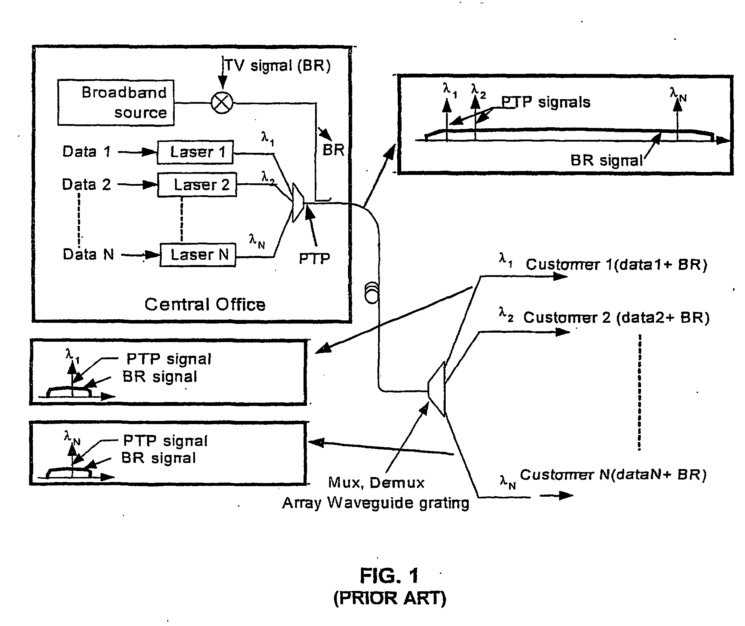

Figure 1 (PRIOR ART) shows an architecture from Lucent Technology allowing the simultaneous transmission of point-to-point (PTP) and broadcast (BR) services. PTP transmission is allowed using wavelength division multiplexing (WDM) technology, where each user is assigned one wavelength channel. The broadcast signal is carried using a broadband signal generated by a LED, and externally modulated by the BR signal. In proximity of the users, an array of waveguide gratings (AWG) multiplexer/demultiplexer splits the total signal into sub-bands, each of which is dedicated to a different user. Each user receives its addressed data through its proper wavelength and a copy of the broadcast signal through the split band of the broadband signal. Electronic processing is usually necessary in order to extract the content of each signal.

The above prior art system however presents several drawbacks. The number of wavelengths that could be carried in a standard frequency band is very limited, especially when low channel count (sparse) multiplexers/demultiplexers are used. Using denser multiplexers/de-multiplexers would however dramatically increase the overall cost of the system. In addition, separate wavelengths for point to point links do not provide any privacy and security to channels. This becomes critical especially in access areas.

OCDM (optical code division multiplexing) is a promising broadcast and select architecture for point-to-point transmissions. Each user receives the sum of all transmitted signals, but however has the authorisation to read only messages carried by his own code. Even if the entire signal is sent to all users, all the information it carries is not accessible by all of them. The OCDM architecture is however generally applied to point-to-point systems. It prevents the delivery of broadcast-nature services like a television signal unless it is electronically added to each PTP link. This is however complex and cumbersome.

SOTOBAYASHI H ET AL: "BROADCAST-AND-SELECT OCDM/WDM NETWORK USING 10GBIT/S SPECTRUM-SLICED SUPERCONTINUUM BPSK PULSE CODE SEQUENCES", ELECTRONICS LETTERS, IEE STEVENAGE, GB, vol. 35, no. 22, 28 October 1999, pages 1966-1967, XP006012909, ISSN: 0013-5194 discloses the preamble of independent claims 1 and 9.

### OBJECTS AND SUMMARY OF THE INVENTION

It is therefore an object of the invention to provide an optical communications method and system for jointly transmitting point-to-point and broadcast signals over a network.

It is a preferable object of the present invention to provide such a method and system that alleviates the above mentioned drawbacks of the prior art.

Accordingly, the present invention provides a method for enabling an exchange of information over an optical network connecting a central office and a plurality of user terminals. The exchanged information includes point-to-point signals exchangeable between the central office and each of the user terminals, and a broadcast signal transmittable from the central office to all of the user terminals. The method includes the steps defined in claim 1.

The present invention also provides an optical communications system for exchanging information over an optical network between a central office and a plurality of users. The information including point-to-point signals exchanged between the central office and each of the users, and a broadcast signal sent from the central office to all of the users.

The system includes a plurality of user terminals associated with the plurality of users. The user terminals are divided into groups of user terminals, and a different spectral waveband is assigned to each of these groups.

The system also includes a central office transmitter provided at the central office. The central office transmitter includes point-to-point encoding means for encoding point-to-point signals using point-to-point codes, different point-to-point codes within a same corresponding waveband being associated to the user terminals of a same group. Broadcast encoding means are also provided, for encoding copies of the broadcast signal using broadcast codes within the corresponding waveband of each group, a single broadcast code being associated with all the user terminals of a same group. The central office transmitter finally includes transmitting means for transmitting the point-to-point signals and copies of the broadcast signal in all wavebands from the central office to the user terminals through the optical network; and

The communications system of the present invention also includes a user receiver provided at each user terminal, for receiving from the optical network the point-to-point signals and copies of the broadcast signal. Each user receiver includes point-to-point decoding means for decoding point-to-point signals encoded using a point-to-point code associated with the corresponding user terminal, and broadcast decoding means for decoding the broadcast signal decodable using the broadcast code associated with the user terminals of the corresponding group of user terminals.

Other features and advantage of the present invention will be better understood upon reading of preferred embodiments thereof with reference to the appended drawings.

### BRIEF DESCRIPTION OF THE DRAWINGS

FIG. 1 (PRIOR ART) shows an optical communications system according to prior art allowing the simultaneous transmission of point-to-point and broadcast signals.
FIGs. 2A, 2B and 2C illustrate the encoding of point-to-point and broadcast signals according to respectively a first embodiment as known from document XP006012909, and, a second and a third embodiment of the present invention.
FIGs. 3A illustrate an optical communications system according to the embodiment of FIG. 2A. FIGs. 3B and 3C show variants to the system of FIG. 3A in accordance with the embodiments of FIGs. 2B and 2C, respectively.
FIG. 4 shows an encoding device for use with a preferred embodiment of the present invention.
FIG. 5 shows a communications system implementing the encoding device of FIG. 4.

### DESCRIPTION OF PREFERRED EMBODIMENTS OF THE INVENTION

In accordance with a first aspect of the present invention, there is provided a method for enabling the exchange of both point-to-point and broadcast information over an optical network. The optical network is preferably optical fiber-based. It is understood the network connects a central office and a plurality of user terminals, each terminal being associated to at least one user. By "point-to-point signals" it is meant transmissions exchangeable between the central office and each of the user terminals individually, and by "broadcast signals" it is meant general transmissions sent from the central office to all of the user terminals, such as a radio or television station, etc. Point-to-point therefore are two-ways, that is that both the central office and the user terminal involve sent and receive information, whereas broadcast transmissions generally involve only a transmitter at the central office and a receiver at each user terminal.

The first step of the present method consists in dividing the user terminals into separate groups, each including a predetermined number of user terminals. For example, in a preferred embodiment each group includes between 2 and 30 user terminals. A different spectral waveband is then assigned to each of these groups. By "waveband" or "wavelength band" it is meant an appropriate portion of the spectrum usable for optical telecommunications, this spectrum being preferably embodied by, but not limited to, standard C, L,or S fiber bands or combinations thereof. Each waveband preferably has a spectral width of about 0.4 to 8 nm, depending on the needs of the encoding scheme used as will be explained further below.

Still in accordance with the present method, within each group of user terminals a different point-to-point code is assigned to each user terminal, this code using strictly the corresponding waveband assigned to this group. The point-to-point codes will be used for encoding and decoding all point-to-point signals exchanged between the central office and the corresponding user terminal. A broadcast code within the corresponding waveband is also provided, but in this case, the same broadcast code is assigned to all user terminals of a same group, for encoding and decoding therewith the broadcast signal sent by the central office to each user terminal of this group. The transmission of all signals in all wavebands of the spectrum is then enabled between the central office and all of the user terminals through the optical network. In this manner, every user terminal receives all of the information transmitted by the central office, but is only able to access from it the point-to-point signals which are specifically addressed thereto and a copy of the broadcast signal.

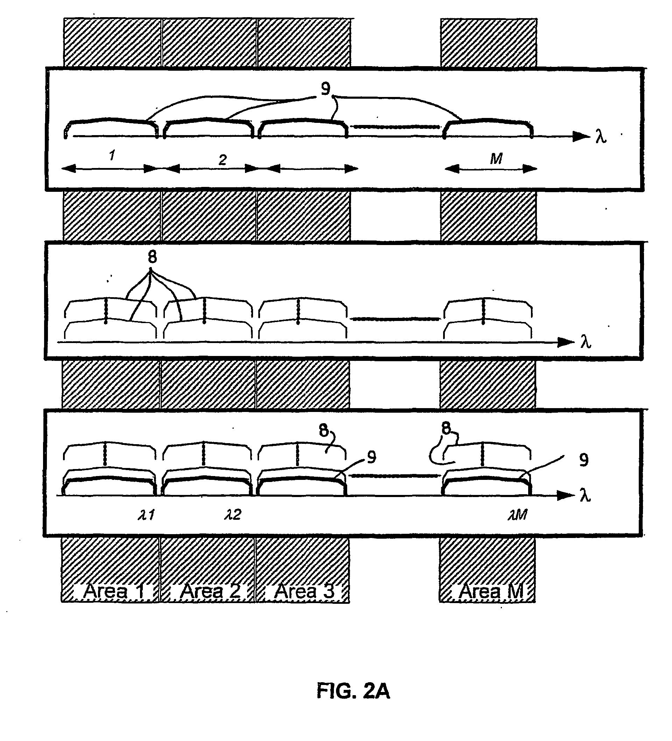

Referring to FIG. 2A, there is shown a first exemplary application of the present method. As may be seen, the spectrum (represented by the horizontal axis) is divided in M wavebands (area1, area2, area3, ..., areaM), which in the present case are all the same width and are evenly spaced. The middle graph shows the encoding of the point-to-point signals 8 to all the users, each with a different point-to-point code using the whole corresponding waveband. Preferably, each point-to-point signal 8 is encoded using an OCDM-type encoding scheme, where a given modulated signal is separated in a number of wavelength peaks with the corresponding waveband, which are delayed with respect to each other in accordance with a given predetermined code. Such a "slice and delay" scheme, also called Frequency Hopping (FH), is for example shown in H. Fathallah, "Fast frequency hopping spread spectrum for code division multiple access communications networks," U.S. no. 09/192,180 and Canada no. 2,249,877). The present invention could also be applied to other encoding schemes such as "spectrum slicing", also called Frequency Encoding (FE), as shown for example in T.Pfeiffer et al., Electronics Letters, vol.33, no.25, pp.2141-2142, 1997).

In the embodiment of FIG. 2A, a copy 9 of the broadcast signal is also encoded within each waveband using an OCDM code, as shown in the top graph. The broadcast OCDM code should be different from the point-to-point OCDM code, and the waveband should therefore be able to support a total of M+1 different codes. As shown in the bottom graph, the transmitted signal is a sum within each waveband of all the signals from the top and middle graphs. Each user terminal however has the capacity to decode only the point-to-point signals encoded using its own personal point-to-point code and the copy of the broadcast signal encoded using the broadcast code of the group it belongs to.

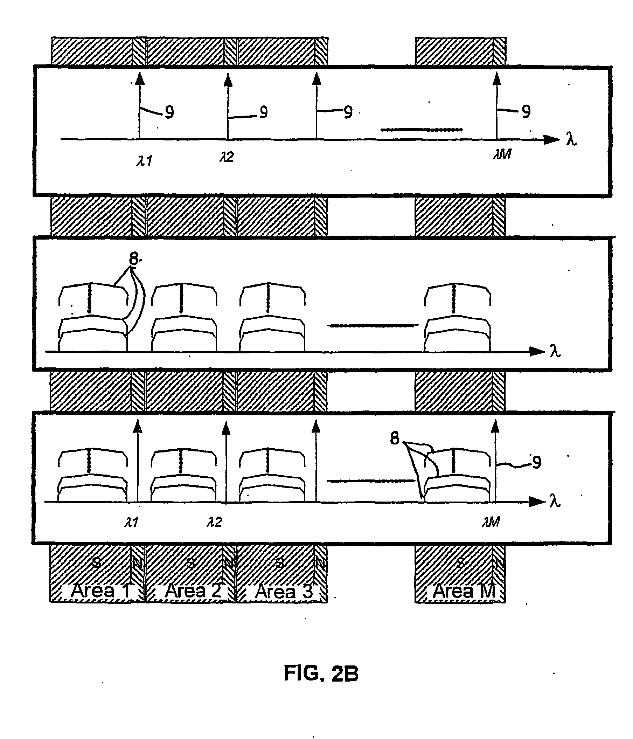

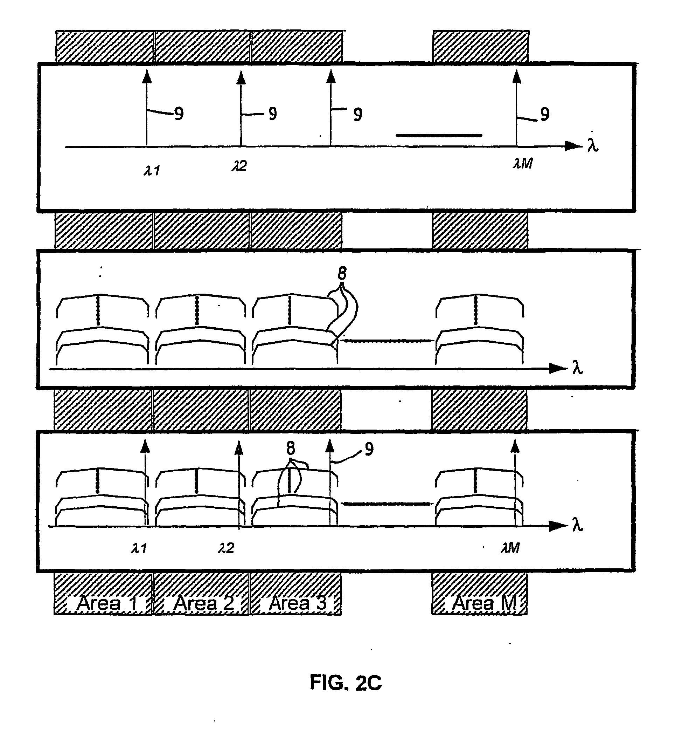

Referring to FIGs. 2B and 2C, there are shown alternative embodiments of the present invention where each copy 9 of the broadcast signal is encoded within a wavelength channel λ₁ λ₂, λ_{M}, included within the corresponding waveband. It will be noted that WDM technology may advantageously be used in this case for the broadcast signal only, as such signals are not the subject of any privacy concerns.

In the embodiments of FIG. 2B, each waveband is further divided into two sub-wavebands S and N. The first sub-waveband S covers preferably a large portion of the corresponding waveband, and is used for the encoding of the point-to-point signals using OCDM codes. The second sub-waveband N should be large enough to provide the wavelength channel used to encode the broadcast signal. In this manner, there is a true spectral separation between the two signals receivable by a given user terminal.

In the embodiment of FIG. 2C, the wavelength channel carrying the broadcast signal overlaps the point-to-point signals which are preferably encoded using the whole waveband. The separation between the point-to-point and broadcast signals is therefore virtual, and appropriate measures to differentiate them upon decoding should be provided.

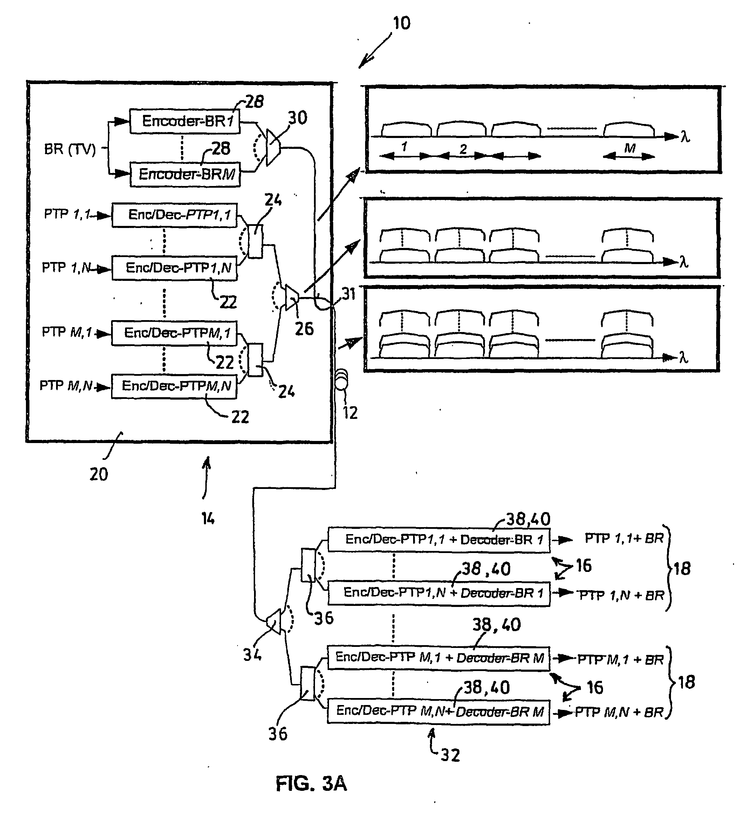

Referring to FIGs. 3A, 3B, 3C, 4 and 5, and in accordance with another aspect of the present invention, there is also provided an optical communications system 10 for exchanging information over an optical network 12, between a central office 14 and a plurality of users. The "information" includes point-to-point signals exchanged between the central office and each of the users and a broadcast signal sent from the central office to all of the users, as explained above.

Referring more particularly to FIG. 3A, there is shown a first preferred embodiment of the system 10 of the present invention, using the method illustrated in FIG. 2A. The system includes a plurality of user terminals 16, associated with the plurality of users. These user terminals 16 are divided into groups 18 of user terminals, and a different spectral waveband is assigned to each of these groups. At the central office 14, a central office transmitter 20 is provided. It includes point-to-point encoding means, preferably embodied by a plurality of point-to-point encoders 22 each associated with one of the user terminals 16 and using a different point-to-point code, preferably embodied by OCDM codes. Point-to-point codes associated to user terminals of a same group 18 all use the corresponding waveband associated with this group 18. Although the principles of the present invention are particularly advantageous for allowing the transmission signals from the central office to the user terminals, it will be well understood by one skilled in the art that in practical applications the system of the present invention will preferably allow the transmission of point-to-point signals from the user terminals back to the central office. For this purpose, the point-to-point encoders 22 are preferably embodied by encoding/decoding devices apt to receive point-to-point signals from the user terminals and decode them using the corresponding point-to-point code. For an example of a particularly advantageous encoding/decoding device for use in the present system, see for example the co-assigned PCT application filed through the Canadian receiving office on April 23, 2002, entitled "Optical encoding/decoding device" (MENIF et al).

The central office transmitter 20 also includes broadcast encoding means for encoding copies of the broadcast signal, preferably embodied by broadcast encoders 28. In this embodiment, which corresponds to the embodiment of FIG. 2A, copies of the broadcast signal are encoded using an OCDM code within each waveband. The broadcast encoders 28 may therefore be similar to the point-to-point encoders 22, with the exception that no decoding capabilities are necessary. A single broadcast encoder is used for each group 18 of user terminals 16, each using a broadcast code within the corresponding waveband of this group 18.

The central office transmitter also includes transmitting means for transmitting the point-to-point signals and copies of the broadcast signal in all wavebands from the central office 14 to all of the user terminals 16 through the optical network 12. In the illustrated embodiment, the point-to-point signals outputted by all the point-to-point encoders 22 of a same group are first combined within a same optical fiber path by a coupler 24, of any type appropriate for combining optical signals of a same waveband. Preferably, the coupler 24 is embodied by a passive splitter/combiner, which combines outgoing signals for transmission to the network 12 and splits incoming signals for distributing portions thereof to the all the encoder/decoders. The combined point-to-point signals from all the different wavebands are then multiplexed using a multiplexer/demultiplexer 26, which is preferably embodied by a passive WDM splitter/combiner. Again, the multiplexer/demultiplexer 26 combines outgoing signals from all wavebands and splits incoming signals into the different wavebands. All the copies of the broadcast signal are also multiplexed by multiplexer 30 and later combined to the point-to-point signals by a coupler 31.

At the each user terminal 16, a user receiver 32 provided for receiving from the optical network the point-to-point signals and copies of the broadcast signal. Preferably in the vicinity of the user terminals a multiplexer/demultiplexer 34 is provided for splitting the incoming signal into the separate wavebands and combining the outgoing signals in all waveband into a same fiber path. within a same group, a passive splitter/combiner 36 splits the signal of the corresponding wavebands into fractions thereof for sending to each user terminal 16, whereas in the other direction it combines all the outgoing signals from the user terminals 16 for transmission to the central office 14.

Each user receiver 32 includes point-to-point decoding means for decoding the point-to-point signals sent to the corresponding user, using the point-to-point code associated with the corresponding user terminal. The decoding means are preferably embodied by an encoder/decoder 38 preferably using an OCDM code. It will be readily understood by one skilled in the art that in the embodiment described herein the encoders and decoders at the central office and the user terminals need to be mirror to each other. In the preferred embodiment, the broadcast signal is also encoded using an OCDM code; there is therefore a need for a second decoder 40 using the appropriate broadcast code associated with the group 18 of terminals 16 the user is associated with.

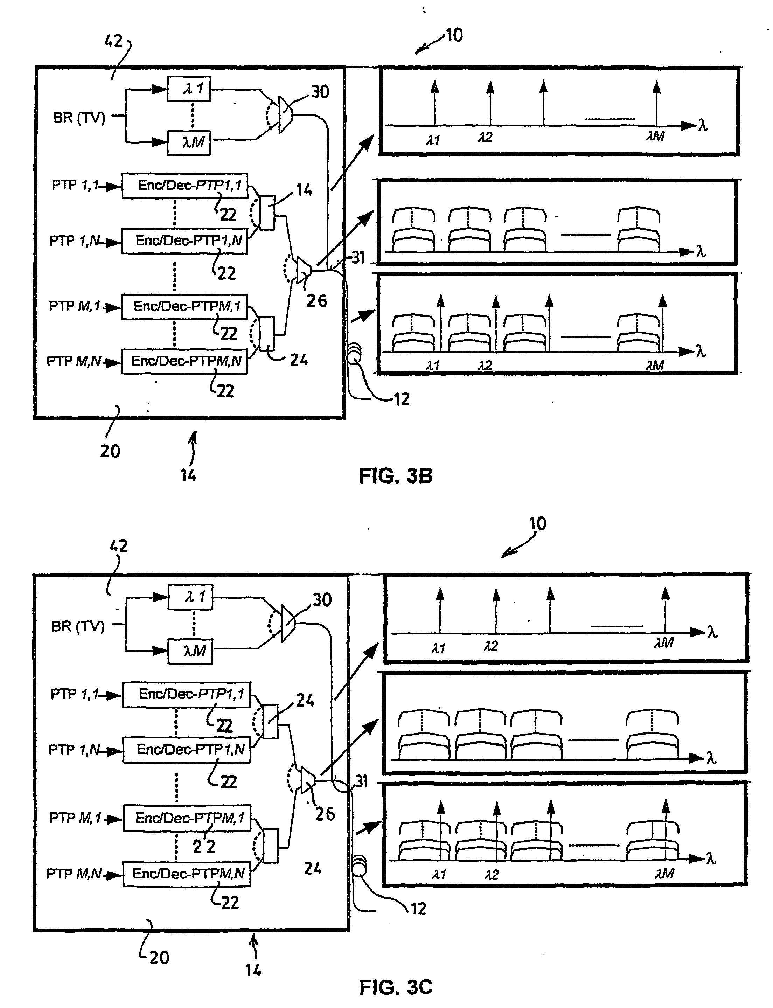

Referring to FIGs. 3B and 3C, there are shown two alternative embodiments of the invention. In this case, the broadcast encoding means include a comb of equally spaced wavelength channels 42 for including a copy of the broadcast signal within one wavelength channel per waveband. This may for example be generated by a bank of separate lasers, laser arrays or filtered broadband sources. In the preferred embodiments of the invention, a LED followed by an external modulator followed by a series of Bragg gratings are used. In the case of FIG. 3B, the point-to-point encoder 22 only use a sub-waveband of the corresponding waveband and the wavelength channel of the corresponding waveband is chosen in a second sub-waveband, as explained with reference to FIG. 2B. In FIG. 3C, as with FIG. 2C, the wavelength channels are superposed to the point-to-point codes. In these embodiments, different techniques may be used to differentiate the broadcast from the point-to-point signals. The wavelength carrying the broadcast signal may be extracted by a notch filter, optically separated from the point-to-point signals and detected by a separate photodetector. In the embodiment of FIG. 3B, this technique could suffer from the noise coming from the point-to-point codes. In the embodiment of FIG. 3C, the broadcast signal can be detected like a conventional WDM signal. Alternatively, electrical separation may be used. If no optical separation is required between the broadcast and point-to-point signal, both are detected simultaneously using the same photodetector. Otherwise, electrical filtering may be used to extract each signal from the other if they are carried with different electrical carriers.

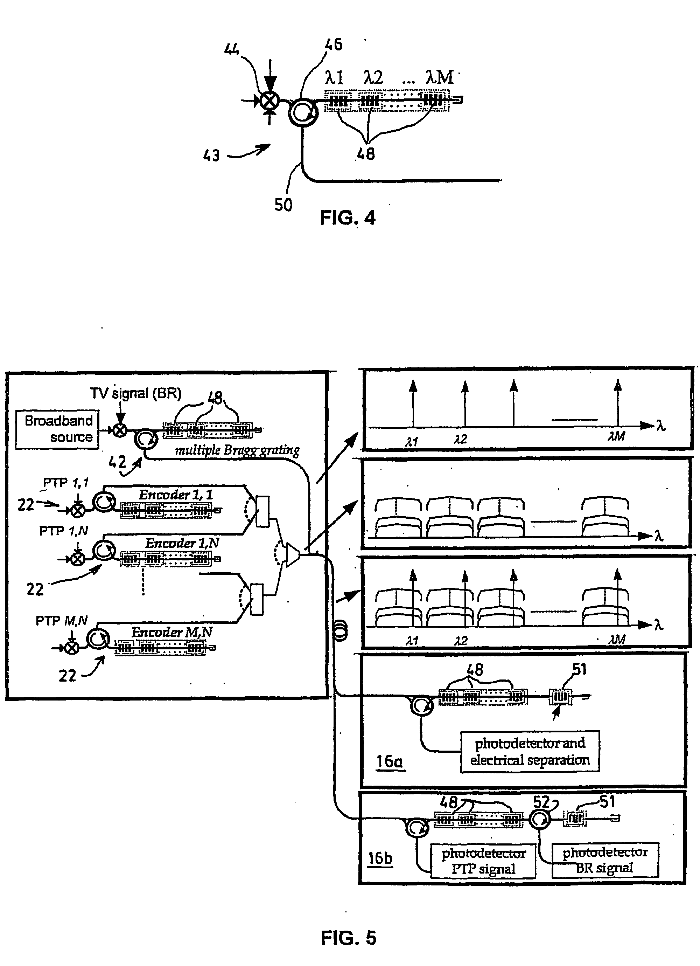

Referring to FIG. 4, there is shown an example of an grating device 43 for use with the system of the present invention. The grating device 43 includes a modulator 44 for modulating the light from a broadband source such as a LED in accordance with the broadcast data, followed by a circulator 46 which redirects the modulated signal to a series of Bragg gratings 48. Each Bragg grating 48 reflects a pre-selected wavelength or small waveband, which goes back through the circulator 46 to be directed towards the output 50.

Referring to FIG. 5, there is shown how the grating device of FIG. 4 may be put to use in the system of the present invention, using the embodiment of FIG. 3B as an example. The grating device is used as the comb of wavelength 42 of the broadcast encoding means by selecting the Bragg gratings 48 so that they each reflect a single wavelength channel, each corresponding to one of the wavebands. The same device may be adapted for use as the point-to-point encoders 22. In this case, The Bragg gratings each reflect a predetermined peak wavelength within the corresponding waveband and the point-to-point codes are generated by varying the order and delay between each peak.

By performing the reverse operation, the same device is used as a decoder, either at the user terminal end or at the central office. In the example of FIG. 5, there are shown two different embodiments of a user terminal using a Bragg grating device as the decoder. In first user terminal 16a, the series of Bragg gratings 48 simply include one grating 51 for the broadcast wavelength channel, the output signal is detected by a single photodetector and the broadcast and point-to-point components are electrically separated. In the second user terminal 16b, a second circulator 52 is positioned between the series of Bragg gratings 48 of the point-to-point decoding and the wavelength channel grating 51, to output the reflected wavelength channel 51 separately.

In summary, the present invention provides a method to architect a fiber optic access network that involves a mix of two different and natures of services: a number of point-to-point services and one broadcast service. The invention proposes the partition of a resource area, here frequency band in a fiber, into a couple of resource segments, one is considered shareable, and the other is not. The sharable segment carries a mix of a number of point to point services, i.e., a kind of source/destination addressing that is required to differentiate point-to-point links. The non-sharable segment carries the broadcast signal and this is transparent for all users (i.e. the signal in this area could be received from any receiver) or observable by all users (or channels).

Typical fiber resource, (include the standard fiber bands like C, L, S etc.), could be partitioned into a number of resource areas, every resource area could be divided into a couple of segments, as previously defined.

One preferred embodiment suggests the use of OCDM codes such as optical fast frequency hopping CDMA codes to support point-to-point links, and wavelengths to support the broadcast signals. A second suggests the use of optical fast frequency hopping codes for all services; however this involves a modified decoding devices. According to this embodiment, the segmentation (or separation) between sharable and non-sharable resource segments could be virtual instead of physical as this is the case in the first embodiment.

The method of architecting the network invented here, however, covers all forms of spectral OCDM technologies.

The benefits of using optical CDMA links for the point to point services consist of: 1) its ability to maximise the number of channels in a specific resource area, 2) security and privacy of the point-to-point links, and 3) the simple low cost splitter/combiner based architecture. However, the benefit of using wavelengths to carry broadcast signal holds in the commercial availability of wavelength division multiplexers and de-multiplexers.

Of course, numerous modifications could be made to the embodiments described above without departing from the scope of the invention as defined in the appended claims.

## Claims

1. A method for simultaneously exchanging point-to-point signals (8) and a broadcast signal over an optical network (12) connecting a central office (14) and a plurality of user terminals (16), said point-to-point signals being exchangeable between the central office and each of the user terminals and the broadcast signal being simultaneously transmittable from the central office to all of the user terminals, said method comprising the steps of:
a) dividing said user terminals into groups (18) of user terminals;
b) assigning a different spectral waveband (Area1, Area2, ..., Area M) to each of said groups;
c) encoding point-to-point signals to user terminals of each group within the corresponding waveband, each of said point-to-point signals being encoded with a predetermined optical code and decodable by only one user terminal;
d) encoding a copy (9) of the broadcast signal within the corresponding waveband of each group, said copy of said broadcast signal being decodable by an user terminals of the corresponding group; and
e) transmitting the point-to-point signals and copies of the broadcast signal in all wavebands from the central office to the user terminals through the optical network,
the method being **characterised by** each copy of the broadcast signal being encoded within a single wavelength channel (λ1, λ2,...,λM) included within said corresponding waveband.

2. The method according to claim 1 wherein the encoding of step c) comprises using OCDM codes.

3. The method according to claim 1, wherein, in each of said wavebands, the single wavelength channel coding said copy of said broadcast signal overlaps the point-to-point optical codes.

4. The method according to claim 1, comprising an additional step before step c) of dividing each waveband into a first and a second sub-waveband, and wherein:
step c) comprises encoding the point-to-point signals into the first sub-waveband of the corresponding waveband; and:
step d) comprises encoding the copies of the broadcast signal into the second sub-waveband of the corresponding waveband.

5. The method according to claim 4, wherein the encoding of step d) comprises providing each copy of the broadcast signal into a single wavelength channel, said wavelength being included into the second sub-waveband of the corresponding waveband.

6. The method according to claim 1, wherein, in step a) each group of user terminals includes between 2 and 30 user terminals.

7. The method according to claim 1, wherein, in step b), each waveband has a spectral width between 0,4 and 8 nm.

8. The method according to claim 1, wherein step e) comprises the substeps of:
i) multiplexing the point to-point and broadcast signals of all wavebands into a multiplexed signal propagating a single optical fiber,
ii) propagating said multiplexed signal through the optical network;
iii) in the vicinity of the user terminals, de-multiplexing the multiplexed signal into waveband signals so that each of said waveband signals propagates in a different optical fiber; and
iv) splitting each waveband signal into a number of fractions corresponding to the number of user terminals in the corresponding group and transmitting said fractions to the user terminal of said group.

9. An optical communication system (10) for simultaneously exchanging point-to-point signals (8) and a broadcast signal over an optical network (12) between a central office (14) and a plurality of users, said point-to-point signals being exchangeable between the central office and each of the users and the broadcast signal being simultaneously transmittable from the central office to all of the users, said system comprising:
a plurality of user terminals (16) associated with the plurality of users, said user terminals being divided into groups (18) of user terminals, a different spectral waveband (Area 1, Area 2,...,Area M)being assigned to each of said groups;
a central office transmitter (20) provided at said central office, comprising:
point-to-point encoding means (22) for encoding point-to-point signals using optical point-to-point codes, different optical point-to-point codes within a same corresponding waveband being associated to the user terminals of a same group;
broadcast encoding means (28) for encoding copies (9) of the broadcast signal; and
transmitting means (24, 26) for transmitting the point-to-point signals and copies of the broadcast signal in all wavebands from the central office to the user terminals through the optical network; and
a user receiver (32) provided at each user terminal for receiving from the optical network the point-to-point signals and copies of the broadcast signal, each user receiver comprising:
point-to-point decoding means (38) for decoding point-to-point signals encoded using an optical point-to-point code associated with the corresponding user terminal; and
broadcast decoding means for decoding the broadcast signal.
the system being **characterized by** the broadcast encoding means using single wavelength channels (λ1,λ2,...,λM) within the corresponding waveband of each group, each single wavelength channel being associated with all the user terminals of a same group and the broadcast decoding means using the single wavelength channel associated with the user terminals of the corresponding group of user terminals.

10. The optical communications system according to claim 9, wherein the point-to-point codes are OCDM codes.

11. The optical communications system according to claim 10, wherein waveband is divided into a first and a second sub-waveband, the point-to-point codes of each waveband being included in the first sub-waveband thereof, and the corresponding single wavelength channel being included into the second sub-waveband.

12. The optical communications system according to claim 9, wherein each group of user terminals includes between 2 and 30 user terminals.

13. The optical communications system according to claim 9, wherein each waveband has a spectral width between 0,4 and 8 nm.

14. The optical communications system according to claim 9, wherein the point-to-point encoding means include a plurality of encoders associated with each user terminals, each of said encoders including a plurality of fiber Bragg gratings (48).

15. The optical communications system according to claim 9, wherein the broadcast encoding means includes a plurality of encoders associated with each of said user groups, each of said encoders including a plurality of fiber Bragg gratings (48).

16. The optical communications system according to claim 9, wherein the transmitting means comprises:
a central office multiplexer (26, 31) for multiplexing the point-to-point and broadcast signals into a multiplexed signal transmitted through said optical network;
a group de-multiplexer (34) positioned in a vicinity of the user terminals for de-multiplexing said multiplexed signal according to said wavebands, each of said wavebands being transmitted to the corresponding group of users; and
a terminal splitter (36) positioned in a vicinity of said user terminals of each group for splitting the corresponding waveband into fractions thereof transmitted to each user terminals of said group.

17. The optical communications system according to claim 9 further comprising a fiber-based optical network (12), for connecting the central office and the plurality of user terminals.

## Patentansprüche

1. Verfahren zum gleichzeitigen Austauschen von Punkt-zu-Punkt-Signalen (8) und eines Broadcast-Signals über ein optisches Netzwerk (12), welches eine Zentrale (14) mit einer Mehrzahl von Benutzerstationen (16) verbindet,
wobei die Punkt-zu-Punkt-Signale zwischen der Zentrale und jeder der Benutzerstationen austauschbar sind, und
wobei das Broadcast-Signal gleichzeitig von der Zentrale zu allen Benutzerstationen übertragbar ist, wobei das Verfahren die Schritte aufweist:
a) Einteilen der Benutzerstationen in Gruppen (18) von Benutzerstationen
b) Zuordnen eines unterschiedlichen Spektral-Wellenbandes (Bereich 1, Bereich 2, ...,Bereich M) zu jeder der Gruppen;
c) Kodieren der Punkt-zu-Punkt-Signale zu den Benutzerstationen jeder Gruppe innerhalb des entsprechenden Wellenbandes, wobei jedes der Punkt-zu-Punkt-Signale mit einem vorbestimmten optischen Code kodiert ist und durch nur eine Benutzerstation dekodierbar ist;
d) Kodieren einer Kopie (9) des Broadcast-Signals innerhalb des entsprechenden Wellenbandes jeder Gruppe,
wobei die Kopie des Broadcast-Signals durch alle Benutzerstationen der entsprechenden Gruppe dekodierbar ist; und
e) Übertragen der Punkt-zu-Punkt-Signale und der Kopien des Broadcast-Signals in allen Wellenbändern von der Zentrale zu den Benutzerstationen durch das optische Netzwerk,
wobei das Verfahren **dadurch gekennzeichnet ist, dass** jede Kopie des Broadcast-Signals in einem einzelnen Wellenlängenkanal (λ1, λ2, ..., λM) kodiert ist, der innerhalb des entsprechenden Wellenbandes enthalten ist.

2. Verfahren gemäß Anspruch 1, wobei das Kodieren von Schritt c) die Verwendung von OCDM-Codes aufweist.

3. Verfahren gemäß Anspruch 1, wobei in jedem der Wellenbänder der einzelne Wellenlängenkanal, der die Kopie des Broadcast-Signals kodiert, die Punkt-zu-Punkt optischen Codes überlappt.

4. Verfahren gemäß Anspruch 1, welches einen zusätzlichen Schritt vor Schritt c) des Teilens jedes Wellenbandes in ein erstes Teil-Wellenband und ein zweites Teil-Wellenband aufweist, und wobei:
Schritt c) das Kodieren der Punkt-zu-Punkt-Signale in das erste Teil-Wellenband des entsprechenden Wellenbandes; und
Schritt d) das Kodieren der Kopien des Broadcast-Signals in das zweite Teil-Wellenband des entsprechenden Wellenbandes aufweist.

5. Verfahren gemäß Anspruch 4, wobei das Kodieren von Schritt d) das Bereitstellen jeder Kopie des Broadcast-Signals in einem einzelnen Wellenlängenkanal aufweist, wobei die Wellenlänge in dem zweiten Teil-Wellenband des entsprechenden Wellenbandes enthalten ist.

6. Verfahren gemäß Anspruch 1, wobei in Schritt a) jede Gruppe von Benutzerstationen zwischen 2 und 30 Benutzerstationen aufweist.

7. Verfahren gemäß Anspruch 1, wobei in Schritt b) jedes wellenband eine Spektralbreite zwischen 0,4 und 8 nm hat.

8. Verfahren gemäß Anspruch 1, wobei Schritt e) die Teilschritte aufweist:
i) Multiplexen der Punkt-zu-Punkt-Signale und des Broadcast-Signals von allen Wellenbändern in ein multiplextes Signal, welches sich in einem einzelnen Lichtwellenleiter fortpflanzt;
ii) Verbreiten des multiplexten Signals durch das optische Netzwerk;
iii) Demultiplexen der multiplexten Signale in der Umgebung der Benutzerstationen in Wellenbandsignale, so dass sich jedes der Wellenbandsignale in einem unterschiedlichen Lichtwellenleiter verbreitet; und
iv) Aufspalten jedes Wellenbandsignals in eine Anzahl von Teilen entsprechend der Anzahl von Benutzerstationen in der entsprechenden Gruppe und Übertragen der Teile zu der Benutzerstation der Gruppe.

9. Optisches Kommunikationssystem (10) zum gleichzeitigen Austauschen von Punkt-zu-Punkt-Signalen (8) und eines Broadcast-Signals über ein optisches Netzwerk (12) zwischen einer Zentrale (14) und einer Mehrzahl von Benutzern, wobei die Punkt-zu-Punkt-Signale zwischen der Zentrale und jedem der Benutzer austauschbar sind, und
wobei das Broadcast-Signal gleichzeitig von der Zentrale zu allen Benutzern übertragbar ist, wobei das System aufweist:
eine der Mehrzahl von Benutzern zugeordnete Mehrzahl von Benutzerstationen (16), wobei die Benutzerstationen in Gruppen (18) von Benutzerstationen eingeteilt ist, wobei jeder der Gruppen ein unterschiedliches Spektral-Wellenband (Bereich 1, Bereich 2, ...,Bereich M) zugeordnet ist;
einen bei der Zentrale vorgesehenen Zentral-Sender (20), aufweisend:
Punkt-zu-Punkt-Kodiereinrichtungen (22) zum Kodieren der Punkt-zu-Punkt-Signale unter Verwendung von optischen Punkt-zu-Punkt-Codes, wobei verschiedene optische Punkt-zu-Punkt-Codes innerhalb eines gleichen entsprechenden Wellenbandes den Benutzerstationen einer gleichen Gruppe zugeordnet sind;
Broadcast-Kodiereinrichtungen (28) zum Kodieren von Kopien (9) des Broadcast-Signals; und
Übertragungseinrichtungen (24, 26) zum Senden der Punkt-zu-Punkt-Signale und der Kopien des Broadcast-Signals in allen Wellenbändern von der Zentrale zu den Benutzerstationen durch das optische Netzwerk; und
ein bei jeder Benutzerstation vorgesehener Benutzerempfänger (32) zum Empfangen der Punkt-zu-Punkt-Signale und der Kopien des Broadcast-Signals, wobei jeder Benutzerempfänger aufweist:
Punkt-zu-Punkt-Dekodiereinrichtungen (38) zum Dekodieren der Punkt-zu-Punkt-Signale, die unter Verwendung eines optischen Punkt-zu-Punkt-Codes kodiert sind, der der entsprechenden Benutzerstation zugeordnet ist; und
Broadcast-Dekodiereinrichtungen zum Dekodieren des Broadcast-Signals,
wobei das System **dadurch gekennzeichnet ist, dass** die Broadcast-Kodiereinrichtungen einzelne Wellenlängenkanäle (λ1, λ2, ..., λM) innerhalb des entsprechenden Wellenbandes jeder Gruppe verwenden, wobei jeder einzelne Wellenlängenkanal allen Benutzerstationen einer gleichen Gruppe zugeordnet ist, und dass die Broadcast-Dekodiereinrichtungen den einzelnen Wellenlängenkanal verwenden, der den Benutzerstationen der entsprechenden Gruppe von Benutzerstationen zugeordnet ist.

10. Optisches Kommunikationssystem gemäß Anspruch 9, wobei die Punkt-zu-Punkt-Codes OCDM-Codes sind.

11. Optisches Kommunikationssystem gemäß Anspruch 10, wobei das Wellenband in ein erstes Teil-Wellenband und ein zweites Teil-Wellenband geteilt ist, wobei die Punkt-zu-Punkt-Codes jedes Wellenbandes in dem ersten Teil-Wellenband davon enthalten sind, und wobei der entsprechende einzelne Wellenlängenkanal in dem zweiten Teil-Wellenband enthalten ist.

12. Optisches Kommunikationssystem gemäß Anspruch 9, wobei jede Gruppe von Benutzerstationen zwischen 2 und 30 Benutzerstationen aufweist.

13. Optisches Kommunikationssystem gemäß Anspruch 9, wobei jedes Wellenband eine Spektralbreite zwischen 0,4 und 8 nm hat.

14. Optisches Kommunikationssystem gemäß Anspruch 9, wobei die Punkt-zu-Punkt-Kodiereinrichtungen eine Mehrzahl von Kodierern aufweisen, die jedem der Benutzerstationen zugeordnet sind, wobei jeder der Kodierer eine Mehrzahl von Bragg-Gittern (48) aufweist.

15. Optisches Kommunikationssystem gemäß Anspruch 9, wobei die Broadcast-Kodereinrichtung eine Mehrzahl von Kodierern aufweist, die jeder der Benutzergruppen zugeordnet sind, wobei jeder der Kodierer eine Mehrzahl von Bragg-Gittern (48) aufweist.

16. Optisches Kommunikationssystem gemäß Anspruch 9, wobei die Übertragungseinrichtung aufweist:
ein Zentrale-Multiplexer (26, 31) zum Multiplexen der Punkt-zu-Punkt-Signale und des Broadcast-Signals in ein multiplextes Signal, welches durch das optische Netzwerk übertragen wird;
ein in einer Umgebung der Benutzerstationen positionierter Gruppen-Demultiplexer (34) zum Demultiplexen des multiplexten Signals gemäß der Wellenbänder, wobei jedes der Wellenbänder zu der entsprechenden Gruppe von Benutzern übertragen wird; und
ein in einer Umgebung der Benutzerstationen von jeder Gruppe positionierter Stations-Splitter (36) zum Aufspalten des entsprechenden Wellenbandes in Teile davon, die zu jeder der Benutzerstationen der Gruppe übertragen werden.

17. Optisches Kommunikationssystem gemäß Anspruch 9, welches ferner ein auf Lichtwellenleitern basierendes optisches Netzwerk (12) zum Verbinden der Zentrale mit der Mehrzahl von Benutzerstationen aufweist.

## Revendications

1. Procédé pour échanger simultanément des signaux point à point (8) et un signal de diffusion sur un réseau optique (12) reliant un central téléphonique (14) et une pluralité de terminaux d'utilisateurs (16), lesdits signaux point à point pouvant être échangés entre le central téléphonique et chacun des terminaux d'utilisateurs et le signal de diffusion pouvant être transmis simultanément du central téléphonique à tous les terminaux d'utilisateurs, ledit procédé comprenant les étapes consistant à :
a) diviser lesdits terminaux d'utilisateurs en groupes (18) de terminaux d'utilisateurs ;
b) attribuer une gamme d'ondes spectrale différente (zone 1, zone 2, ..., zone M) à chacun desdits groupes ;
c) coder les signaux point à point aux terminaux d'utilisateurs de chaque groupe à l'intérieur de la gamme d'ondes correspondante, chacun desdits signaux point à point étant codé avec un code optique prédéterminé et pouvant être décodé par un seul terminal d'utilisateur ;
d) coder une copie (9) du signal de diffusion avec la gamme d'ondes correspondante de chaque groupe, ladite copie dudit signal de diffusion pouvant être décodée par tous les terminaux d'utilisateurs du groupe correspondant ; et
e) transmettre les signaux point à point et les copies du signal de diffusion dans toutes les gammes d'ondes à partir du central téléphonique vers les terminaux d'utilisateurs à travers le réseau optique,
le procédé étant **caractérisé en ce que** chaque copie du signal de diffusion est codée à l'intérieur d'un canal à une seule longueur d'onde (λ1, λ2, ..., λM) compris à l'intérieur de ladite gamme d'ondes correspondante.

2. Procédé selon la revendication 1, dans lequel le codage de l'étape c) comprend l'utilisation de codes OCDM.

3. Procédé selon la revendication 1, dans lequel, dans chacune desdites gammes d'ondes, le canal à une seule longueur d'onde codant ladite copie dudit signal de diffusion recouvre les codes optiques point à point.

4. Procédé selon la revendication 1, comprenant une étape supplémentaire avant l'étape c) consistant à diviser chaque gamme d'ondes en une première et une seconde sous-gamme d'ondes, et dans lequel :
l'étape c) comprend le codage des signaux point à point dans la première sous-gamme d'ondes de la gamme d'ondes correspondante ; et
l'étape d) comprend le codage des copies du signal de diffusion dans la seconde sous-gamme d'ondes de la gamme d'ondes correspondante.

5. Procédé selon la revendication 4, dans lequel le codage de l'étape d) comprend l'étape consistant à fournir chaque copie du signal de diffusion dans un canal à une seule longueur d'onde, ladite longueur d'onde étant comprise dans la seconde sous-gamme d'ondes de la gamme d'ondes correspondante.

6. Procédé selon la revendication 1, dans lequel, à l'étape a) chaque groupe de terminaux d'utilisateurs comprend entre 2 et 30 terminaux d'utilisateurs.

7. Procédé selon la revendication 1, dans lequel, à l'étape b), chaque gamme d'ondes a une largeur spectrale comprise entre 0,4 et 8 nm.

8. Procédé selon la revendication 1, dans lequel l'étape e) comprend les sous-étapes consistant à :
i) multiplexer les signaux point à point et de diffusion de toutes les gammes d'ondes en un signal multiplexé propageant une seule fibre optique ;
ii) propager ledit signal multiplexé à travers le réseau optique ;
iii) à proximité des terminaux d'utilisateurs, démultiplexer le signal multiplexé en signaux de la gamme d'ondes de sorte que chacun desdits signaux de la gamme d'ondes se propage dans une fibre optique différente ; et
iv) séparer chaque signal de la gamme d'ondes en un certain nombre de fractions correspondant au nombre de terminaux d'utilisateurs dans le groupe correspondant et transmettre lesdites fractions au terminal d'utilisateur dudit groupe.

9. Système de communications optiques (10) pour échanger simultanément des signaux point à point (8) et un signal de diffusion sur un réseau optique (12) entre un central téléphonique (14) et une pluralité d'utilisateurs, lesdits signaux point à point pouvant être échangés entre le central téléphonique et chacun des utilisateurs et le signal de diffusion pouvant être transmis simultanément du central téléphonique à tous les utilisateurs, ledit système comprenant :
une pluralité de terminaux d'utilisateurs (16) associée à la pluralité d'utilisateurs, lesdits terminaux d'utilisateurs étant divisés en groupes (18) de terminaux d'utilisateurs, une gamme d'ondes spectrale différente (zone 1, zone 2, ..., zone M) étant attribuée à chacun desdits groupes ;
un émetteur de central téléphonique (20) pourvu au niveau dudit central téléphonique, comprenant :
des moyens de codage point à point (22) pour coder les signaux point à point en utilisant des codes point à point optiques, des codes point à point optiques différents à l'intérieur d'une même gamme d'ondes correspondante étant associés aux terminaux d'utilisateurs d'un même groupe ;
des moyens de codage de diffusion (28) pour coder des copies (9) du signal de diffusion ; et
des moyens de transmission (24, 26) pour transmettre les signaux point à point et les copies du signal de diffusion dans toutes les gammes d'ondes du central téléphonique aux terminaux d'utilisateurs à travers le réseau optique ; et
un récepteur d'utilisateur (32) pourvu au niveau de chaque terminal d'utilisateur pour recevoir du réseau optique les signaux point à point et les copies du signal de diffusion, chaque récepteur d'utilisateur comprenant :
des moyens de décodage point à point (38) pour décoder les signaux point à point codés en utilisant un code point à point optique associé au terminal d'utilisateur correspondant ; et
des moyens de décodage de diffusion pour décoder le signal de diffusion ;
le système étant **caractérisé en ce que** les moyens de codage de diffusion utilisent des canaux à une seule longueur d'onde (λ1, λ2, ..., λM) à l'intérieur de la gamme d'ondes correspondante de chaque groupe, chaque canal à une seule longueur d'onde étant associé à tous les terminaux d'utilisateurs d'un même groupe et **en ce que** les moyens de décodage de diffusion utilisent le canal à une seule longueur d'onde associé aux terminaux d'utilisateurs du groupe correspondant de terminaux d'utilisateurs.

10. Système de communications optiques selon la revendication 9, dans lequel les codes point à point sont des codes OCDM.

11. Système de communications optiques selon la revendication 10, dans lequel chaque gamme d'ondes est divisée en une première et une seconde sous-gamme d'ondes, les codes point à point de chaque gamme d'ondes étant compris dans la première sous-gamme d'ondes de celle-ci, et le canal à une seule longueur d'onde correspondant étant compris dans la seconde sous-gamme d'ondes.

12. Système de communications optiques selon la revendication 9, dans lequel chaque groupe de terminaux d'utilisateurs comprend entre 2 et 30 terminaux d'utilisateurs.

13. Système de communications optiques selon la revendication 9, dans lequel chaque gamme d'ondes a une largeur spectrale comprise entre 0,4 et 8 nm.

14. Système de communications optiques selon la revendication 9, dans lequel les moyens de codage point à point comprennent une pluralité de codeurs associés à chaque terminal d'utilisateur, chacun desdits codeurs comprenant une pluralité de réseaux de Bragg sur fibre (48).

15. Système de communications optiques selon la revendication 9, dans lequel les moyens de codage de diffusion comprennent une pluralité de codeurs associés à chacun desdits groupes d'utilisateurs, chacun desdits codeurs comprenant une pluralité de réseaux de Bragg sur fibre (48).

16. Système de communications optiques selon la revendication 9, dans lequel les moyens de transmission comprennent :
un multiplexeur de central téléphonique (26, 31) pour multiplexer les signaux point à point et de diffusion en un signal multiplexé transmis à travers ledit réseau optique ;
un démultiplexeur de groupe (34) positionné à proximité des terminaux d'utilisateurs pour démultiplexer ledit signal multiplexé selon lesdites gammes d'ondes, chacune desdites gammes d'ondes étant transmise au groupe d'utilisateurs correspondant ; et
un séparateur de terminal (36) positionné à proximité desdits terminaux d'utilisateurs de chaque groupe pour séparer la gamme d'ondes correspondante en fractions de celle-ci transmises à chaque terminal d'utilisateur dudit groupe.

17. Système de communications optiques selon la revendication 9, comprenant en outre un réseau optique à base de fibres (12) pour relier le central téléphonique et la pluralité de terminaux d'utilisateurs.
